# EUROPÄISCHE PATENTSCHRIFT

(11) **EP 1 755 320 B1**
(45) Veröffentlichungstag und Bekanntmachung des Hinweises auf die Patenterteilung: **02.11.2011**
(21) Anmeldenummer: 06016922.4
(22) Anmeldetag: 14.08.2006
(51) Int. Cl.: H04M 1/60

(54) **Freisprecheinrichtung für ein Mobiltelefon**
Hands-free kit for mobile phone
Dispositif à mains-libres pour téléphone portable

(30) Priorität: 15.08.2005 DE 102005038722
(43) Veröffentlichungstag der Anmeldung: 21.02.2007
(73) Patentinhaber: BURY Sp. z o.o., 39-300 Mielec (PL)
(72) Erfinder: Piekarz, Roman, 39-300 Mielec (PL)
(74) Vertreter: Lins, Edgar

(56) Entgegenhaltungen:
- WO-A-00/45570
- WO-A-03/056790
- DE-A1- 10 100 824
- US-A1- 2002 198 031
- "Bedienungsanleitung Installationsanleitung Nokia 610 Profi Funk-Kfz-Einbausatz" [Online] 2004, , XP002392416 Gefunden im Internet: URL:http://www.nds1.nokia.com/phones/files /guides/Nokia_610_UG_de.pdf> [gefunden am 2006-06-27] * das ganze Dokument * & NOKIA: "Das Nokia 610 Car Kit vereinfacht automobile Kommunikation" INTERNET CITATION, [Online] 28. Oktober 2003 (2003-10-28), XP002321251 Gefunden im Internet: URL:http://www.nokia.ch/german/about_nokia /press/2003/Nokia_610_031028.html> [gefunden am 2005-03-15]
- BLUETOOTH SPECIAL INTEREST GROUP: "SIM access profile, interoperability specification" INTERNET CITATION, 6. Juni 2002 (2002-06-06), XP002314566 [gefunden am 2005-01-25]

## Beschreibung

Die Erfindung betrifft eine Freisprecheinrichtung zum Führen eines mit einem Mobiltelefon herstellbaren Telefonats, mit einer Steuerung, die mit einem Mikrofon und einem Lautsprecher verbunden ist und mit einem Hörer, zu dem eine Kommunikationsverbindung der Steuerung besteht und der in einer Halterung mit einem elektrischen Anschluss ablegbar ist, wobei durch Abnehmen des Hörers von der Halterung die Führung des Telefonats nur noch über den Hörer erfolgt. Die Erfindung betrifft ferner eine Verwendung des Hörers einer derartigen Freisprecheinrichtung.

Freisprecheinrichtungen dienen bekanntlich dazu, die über ein Mobiltelefon hergestellten Telefonate führen zu können, ohne das Telefon in der Hand halten zu müssen. Hierzu werden die Audiosignale des Telefons, aber auch Steuerungssignale für die Herstellung und Beendigung des Telefonats, vom Mobiltelefon auf die Freisprecheinrichtung und umgekehrt übertragen, sodass das Telefonat mittels mit der Steuerung der Freisprecheinrichtung verbundenem Mikrofon und Lautsprecher abgewickelt werden kann. Ferner ermöglicht die Freisprecheinrichtung regelmäßig, das Telefonat über eine mit ihr verbundene externe Antenne, insbesondere eine Auto-Mobilfunkantenne, zu führen.

Es ist ferner bekannt, die Stimme des Anrufers nicht über den Lautsprecher der Freisprecheinrichtung wiedergeben zu müssen, wenn dies vom Telefonierenden nicht gewünscht wird. Hierzu kann die Freisprecheinrichtung mit einem Hörer versehen sein, der in einer Halterung ablegbar ist, wobei durch Abnehmen des Hörers ein Signal verursacht wird, das Mikrofon und Lautsprecher der Freisprecheinrichtung abschaltet, sodass das Telefonat nur noch über den Hörer erfolgt, wodurch die Anwesenden die Stimme des Anrufers nicht mehr wahrnehmen können.

Für die Realisierung einer derartigen Freisprechanlage mit einem Hörer, der als sog. Privathörer fungiert, sind zahlreiche Konstellationen bekannt. In einer sehr herkömmlichen Art bildet das Mobiltelefon selbst den Hörer, indem es, in einem Kraftfahrzeug, in einer Halterung ablegbar ist. Das in die Halterung eingelegte Telefon schaltet die Freisprecheinrichtung wirksam. Soll das Gespräch als Privatgespräch abgewickelt werden, wird das als Hörer dienende Telefon aus der Halterung genommen, wodurch die Wiedergabe des Telefonats über den Lautsprecher abgeschaltet wird. Das Telefon ist dabei regelmäßig über eine Kabelverbindung mit der Freisprecheinrichtung verbunden. Bekannt ist dabei allerdings auch, ein mit einer drahtlosen Kommunikationseinrichtung, vorzugsweise nach dem Bluetooth-Standard, ausgestattetes Telefon zu verwenden, das drahtlos mit der Freisprecheinrichtung kommunizieren kann, wobei die übertragenen Signale als so genanntes "Hands Free Profile" (HFP) in genormter Form übertragen werden. Nachteilig ist hierbei, dass das Telefon in eine für das Telefon spezielle Halterung eingelegt werden muss, sodass die Nutzung eines anderen Telefontyps nicht möglich ist.

Es ist ferner bekannt, ein Telefon über eine Kabelverbindung mit einer Freisprecheinrichtung zu verbinden, wobei die Freisprecheinrichtung eine eigene Telefonsende- und -empfangseinheit aufweist, um das Telefonat in einem Kraftfahrzeug über die im Kraftfahrzeug eingebaute Mobilfunkantenne führen zu können. Dabei kann ein zusätzlicher Hörer vorgesehen sein, der mit der Freisprecheinrichtung über eine drahtlose Kommunikationseinrichtung kommuniziert, um ein Privatgespräch über den Hörer führen zu können. Zwischen Hörer und Freisprecheinrichtung wird dann das Gespräch über HFP übertragen. Dabei kann der Hörer zusätzlich noch eine Datenverbindung aufweisen, um über Tasten und ein Display das Telefongespräch zu steuern, also aufzubauen, zu halten oder zu beenden.

Durch US 2002/0198031 A1 ist eine nicht näher erläuterte Freisprecheinrichtung eines Kraftfahrzeugs bekannt, die ein Bluetooth-Modul aufweisen soll, also zu einer kurzreichweitigen drahtlosen Kommunikation geeignet ist. Damit die Freisprecheinrichtung mit einem Mobiltelefon kommunizieren kann, das keine Bluetooth-Funktion aufweist, wird das Mobiltelefon über eine Kabelverbindungseinrichtung mit dem Kraftfahrzeug verbunden. Das Kabel kann dabei am kraftfahrzeugseitigen Ende, am telefonseitigen Ende oder integriert in dem Kabel ein Bluetooth-Modul aufweisen. Über das Bluetooth-Modul des Kabels kann die Kommunikation mit dem entsprechenden Bluetooth-Modul der Freisprecheinrichtung erfolgen.

Ein Hörer, der in einer Halterung mit einem elektrischen Anschluss ablegbar ist und die Funktion hat, durch das Abnehmen des Hörers von der Halterung eine Umschaltung der Audiosignale vom Lautsprecher/Mikrofon der Freisprecheinrichtung auf den Hörer vorzunehmen, ist nicht offenbart.

WO 03/056790 A1 offenbart eine Kopfhöreranordnung mit der über eine Bluetooth-Verbindung Signale verschiedener Signalquellen über die Ohr-Lautsprecher bearbeitet wiedergegeben werden können. Die Kopfhöreranordnung dient als Freisprecheinrichtung, sodass nur Privatgespräche ermöglicht werden. Eine Umschaltung zwischen Privatgesprächen und der Wiedergabe über Fahrzeuglautsprecher ist ebenso wenig vorgesehen, wie ein Hörer.

WO 2004/080043 A1 beschreibt ein System mit einem Mobiltelefon, das über eine Bluetooth-Verbindung einerseits mit einer Kopfhöreranordnung und andererseits mit einer Freisprecheinrichtung verbindbar ist, sodass entweder eine Wiedergabe über die Kopfhörer oder die Wiedergabe über die Fahrzeuglautsprecher möglich ist. Die entsprechende Steuerung erfolgt über das Mobiltelefon, das demgemäß für eine derartige Steuerung eingerichtet sein muss. Auch bei diesem System ist kein Hörer vorhanden, der eine Hörerfunktion im Sinne der Umschaltung zwischen einem Privatgespräch und einer Wiedergabe des Telefonats über die Lautsprecher des Fahrzeugs durch Aufnehmen von der Halterung oder Auflegen auf die Halterung ermöglicht. Vielmehr wird diese Umschaltung durch das Mobiltelefon selbst gesteuert.

Der vorliegenden Erfindung liegt die Aufgabe zugrunde, eine Freisprecheinrichtung so auszubilden, dass mit dem Hörer eine verbesserte und erweiterte Funktionalität erreichbar ist.

Zur Lösung dieser Aufgabe ist erfindungsgemäß eine Freisprecheinrichtung der eingangs erwähnten Art **dadurch gekennzeichnet, dass** die Steuerung eine drahtlose Kommunikationseinrichtung zur Kommunikation mit einer entsprechenden drahtlosen ersten Kommunikationseinrichtung des Hörers aufweist und dass der Hörer ferner mit einer drahtlosen zweiten Kommunikationseinrichtung zur Kommunikation mit einer entsprechenden drahtlosen Kommunikationseinrichtung des Mobiltelefons, mit einer Einrichtung zum Verarbeiten von Zugangsberechtigungsdaten zu einem Mobilfunknetz und mit einer Telefonsende- und -empfangseinheit versehen ist.

Dem Aufbau der erfindungsgemäßen Freisprecheinrichtung liegt die Erkenntnis zugrunde, dass ein komfortabel ausgestatteter herkömmlicher Hörer zwar eine hohe Funktionalität aufweist, jedoch nur in der vorgesehenen bestimmten Konfiguration der Freisprecheinrichtung nutzbar ist.

Demgegenüber ist eine erfindungsgemäße Ausbildung der Freisprecheinrichtung geeignet, mit dem Hörer sehr unterschiedliche Konfigurationen zu bilden, sodass der Hörer in vielfältiger Weise innerhalb ganz unterschiedlicher Konfigurationen von Freisprecheinrichtungen einsetzbar und darüber hinaus außerhalb des Bereichs der Freisprecheinrichtung, also insbesondere außerhalb eines Kraftfahrzeugs, als eigenständiges Telefon nutzbar ist.

Hierfür kann der Hörer mit einem Kartenleser für eine die Zugangsberechtigungsdaten enthaltende Karte (SIM-Karte) ausgestattet sein. Es ist jedoch auch möglich, dass die zweite drahtlose Kommunikationseinrichtung des Hörers zur Übertragung der Zugangsberechtigungsdaten des Mobiltelefons ausgebildet ist, sodass die Übertragung der Zugangsberechtigungsdaten mittels des so genannten rSAP-Standards erfolgen kann.

Vorzugsweise ist der Hörer mit einer Eingabetastatur und mit einem Display versehen, um eine vollwertige eigene Telefonfunktion zu ermöglichen.

In der beigefügten Zeichnung sind schematisch sechs Einsatzbeispiele für den erfindungsgemäßen Hörer dargestellt.

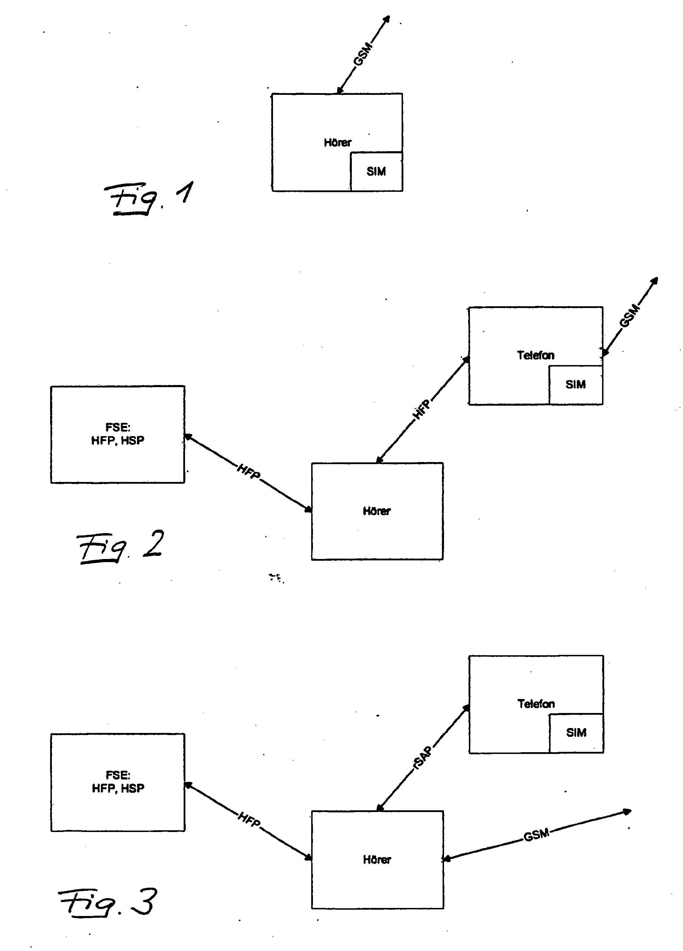

Figur 1 zeigt die Benutzung des erfindungsgemäßen Hörers als eigenständiges Telefon, also ohne eine Kommunikationsverbindung zu einer Freisprecheinrichtung. Hierzu ist in den Hörer eine eigene SIM-Karte eingesetzt, die beispielsweise eine Doppelkarte (TWIN-Karte) eines Mobiltelefons sein kann. Der Hörer der freisprecheinrichtung kann somit als ein beispielsweise im Kraftfahrzeug immer vorhandenes und außerhalb des Kraftfahrzeuges jederzeit verfügbares Mobiltelefon genutzt werden, da der Hörer mit einer eigenen Telefonsende- und -empfangseinheit (hier dargestellt nach dem GSM-Standard) versehen ist.

Gemäß Figur 2 dient der Hörer als Verbindungseinrichtung zwischen dem Mobiltelefon, über das eine Telefonverbindung (GSM) mit den Daten einer SIM-Karte aufgebaut wird und einer, vorzugsweise im Kraftfahrzeug eingebauten Freisprecheinrichtung FSE. Die Freisprecheinrichtung ist mit einer drahtlosen Kommunikationseinrichtung versehen, mit der Audiodaten und Steuerdaten nach dem Kopfhörermodus HSP (Head Set Profile) übermittelt werden können. Die Übermittlung erfolgt hier mit HFP zum Hörer. Vom Hörer findet eine zweite Übermittlung der HFP zum Telefon statt. Der Hörer fungiert somit quasi als Relais zwischen Telefon und Freisprecheinrichtung FSE und erlaubt somit die Funktion als Privathörer.

Gemäß Figur 3 wird die eigene Telefonsende- und -Empfangseinrichtung(GSM) des Hörers verwendet, um ein Telefonat aufzubauen. Der Aufbau erfolgt mit den bei rSAP vom Telefon übermittelten Zugangsberechtigungsdaten (SIM) zu einem Mobilfunknetz. Der Hörer ist über HFP mit der Freisprecheinrichtung FSE verbunden und übt dabei die Möglichkeit aus, das Gespräch über die Freisprecheinrichtung oder über den Hörer als Privatgespräch zu führen. Da der Hörer das Telefonat führt, wird das Telefon bezüglich des Stromverbrauchs nur geringfügig belastet, um die Datenverbindung gemäß rSAP aufrecht zu erhalten. Der für das Senden und den Empfang im Rahmen des Telefonats erhöhte Stromverbrauch findet im Hörer statt, der in seiner Halterung aus der Stromversorgung des Kraftfahrzeugs ständig aufladbar ist. Wenn die Halterung mit der Auto-Mobilfunkantenne verbunden ist, können die Sende- und Empfangssignale des Hörers über diese externe Antenne abgestrahlt bzw. empfangen werden, wodurch im Freisprechbetrieb eine Strahlenbelastung im Innenraum des Kraftfahrzeugs vermeidbar ist, obwohl die Freisprecheinrichtung selbst nicht mit einer eigenen Telefonsende- und -empfangseinheit ausgestattet ist.

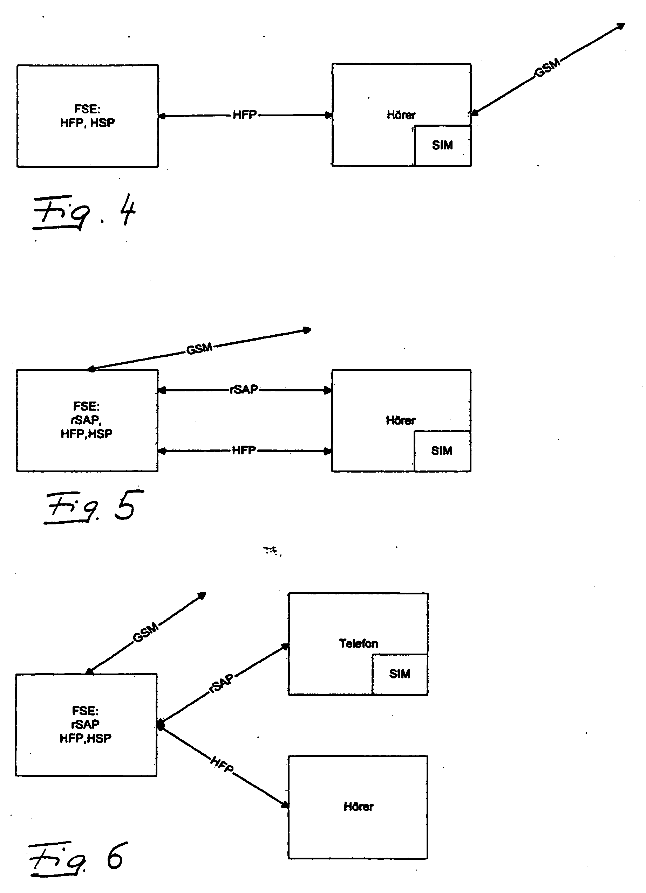

In der in Figur 4 dargestellten Konstellation dient der Hörer unmittelbar als Mobiltelefon mit einer eigenen SIM-Karte. Zur Freisprecheinrichtung FSE ist der Hörer über HFP drahtlos verbunden.

Eine ähnliche Konstellation findet sich in Figur 5, bei der der Hörer quasi als SIM-Kartenserver für die Freisprecheinrichtung FSE fungiert, sodass über eine eigene Telefonsende- und -Empfangseinrichtung der FSE, insbesondere über die Auto-Mobilfunkantenne, das Gespräch innerhalb des Mobilfunknetzes mit den Zugangsdaten der in den Hörer eingesetzten SIM-Karte geführt werden kann. Für die Privathörfunktion ist der Hörer zusätzlich über HFP mit der FSE verbunden.

Gemäß Figur 6 hat der Hörer ausschließlich die Funktion, über ihn ein Privatgespräch zu führen, das mit den SIM-Kartendaten des Mobiltelefons, die über rSAP auf die Freisprecheinrichtung FSE übertragen worden sind, von der Freisprecheinrichtung FSE mittels der eigenen Telefonsende- und -Empfangseinheit geführt wird.

Es ist erkennbar, dass alle dargestellten Konfigurationen keine Änderungen an dem erfindungsgemäß ausgebildeten Hörer erfordern, da dieser mit der Freisprecheinrichtung FSE und ggf. mit dem Mobiltelefon nur über die drahtlosen Kommunikationseinrichtungen kommuniziert und funktioniert. Demgemäß sind alle Konfigurationen auch mit beliebigen Mobilfunktelefonen möglich, für die, beispielsweise in einem Kraftfahrzeug, keine spezifischen Einrichtungen vorgesehen sein müssen. Vielmehr kommt es lediglich darauf an, dass der Hörer mit der Freisprecheinrichtung FSE einerseits und ggf. mit dem Mobiltelefon andererseits eine Initialisierung der drahtlosen Kommunikation (über Bluetooth) vornimmt, um eine sofort funktionierende Bluetooth-Verbindung zu ermöglichen, wenn beispielsweise das Mobiltelefon in eine gewünschte Konfiguration mit der Freisprecheinrichtung FSE eintreten soll.

Die Funktionalität des Hörers ist jederzeit nutzbar, ggf. auch als eigenes Mobiltelefon, das immer in der Halterung des Kraftfahrzeugs verfügbar - und dabei vorzugsweise aufladbar - und daraus entnehmbar ist, wenn vom Benutzer des Kraftfahrzeugs auch außerhalb des Kraftfahrzeugs ein Bedarf für die Benutzung eines Mobiltelefons besteht.

## Patentansprüche

1. Freisprecheinrichtung zum Führen eines mit einem Mobiltelefon herstellbaren Telefonats, mit einer Steuerung, die mit einem Mikrofon und einem Lautsprecher verbunden ist und mit einem Hörer, zu dem eine Kommunikationsverbindung der Steuerung besteht und der in einer Halterung mit einem elektrischen Anschluss ablegbar ist, wobei durch Abnehmen des Hörers von der Halterung die Führung des Telefonats nur noch über den Hörer erfolgt, **dadurch gekennzeichnet, dass** die Steuerung eine drahtlose Kommunikationseinrichtung zur Kommunikation mit einer entsprechenden drahtlosen ersten Kommunikationseinrichtung des Hörers aufweist und dass der Hörer ferner mit einer drahtlosen zweiten Kommunikationseinrichtung zur Kommunikation mit einer entsprechenden drahtlosen Kommunikationseinrichtung des Mobiltelefons, mit einer Einrichtung zum Verarbeiten von Zugangsberechtigungsdaten zu einem Mobilfunknetz und mit einer Telefonsende- und -empfangseinheit versehen ist.

2. Freisprecheinrichtung nach Anspruch 1, **dadurch gekennzeichnet, dass** der Hörer mit einem Kartenleser für eine die Zugangsberechtigungsdaten enthaltende Karte (SIM-Karte) ausgestattet ist.

3. Freisprecheinrichtung nach Anspruch 1 oder 2, **dadurch gekennzeichnet, dass** die zweite drahtlose Kommunikationseinrichtung zur Übertragung der Zugangsberechtigungsdaten des Mobiltelefons ausgebildet ist.

4. Freisprecheinrichtung nach einem der Ansprüche 1 bis 3, **dadurch gekennzeichnet, dass** der Hörer mit einer Eingabetastatur versehen ist.

5. Freisprecheinrichtung nach einem der Ansprüche 1 bis 4, **dadurch gekennzeichnet, dass** der Hörer mit meinem Display zur Anzeige von Telefondaten versehen ist.

6. Freisprecheinrichtung nach einem der Ansprüche 2 bis 5, **dadurch gekennzeichnet, dass** der Hörer mit einer eigenen Spannungsquelle ausgebildet ist.

7. Freisprecheinrichtung nach Anspruch 6, **dadurch gekennzeichnet, dass** die Spannungsquelle des Hörers durch einen Akkumulator gebildet ist, der bei in die Halterung eingesetzten Hörer aufladbar ist.

8. Verwendung des Hörers der Freisprecheinrichtung nach Anspruch 6 oder 7 als eigenständiges Mobiltelefon.

## Claims

1. A handsfree device for conducting a telephone call which can be established by means of a mobile telephone, comprising a controller which is connected to a microphone and a loudspeaker, and with a handset to which a communication link of the controller exists, and which can be deposited in a holder with an electrical connection, wherein the telephone call is only conducted via the handset by removing the handset from the holder, wherein the controller has a wireless communication device for communicating with a corresponding wireless first communication device of the handset and the handset is also provided with a wireless second communication device for communicating with a corresponding wireless communication device of the mobile telephone, with a device for processing access authorization data to a mobile radio network and with a telephone transmitting and receiving unit.

2. The handsfree device as claimed in claim 1, wherein the handset is equipped with a card reader for a card containing the access authorization date (SIM card).

3. The handsfree device as claimed in claim 1 or 2, wherein the second wireless communication device is arranged for transmitting the access authorization data of the mobile telephone.

4. The handsfree device as claimed in one of claims 1 to 3, where the handset is provided with an input keypad.

5. The handsfree device as claimed in one of claims 1 to 4, wherein the handset is provided with a display for displaying telephone data.

6. The handsfree device as claimed in one of claims 2 to 5, wherein the handset is arranged with its own voltage source.

7. The handsfree devices as claimed in claim 6, wherein the voltage source of the handset is formed by a battery which can be charged up when the handset is inserted into the holder.

8. The use of the handset of the handsfree device as claimed in claim 6 or 7 as independent mobile telephone.

## Revendications

1. Dispositif à mains libres pour tenir une conversation téléphonique pouvant être établie avec un téléphone portable, comprenant une commande qui est reliée à un microphone et un haut-parleur, et comprenant un combiné au niveau duquel se trouve une liaison de communication de la commande et qui peut reposer dans un support ayant un raccordement électrique, la conversation téléphonique ne se tenant plus que par le combiné lorsqu'on décroche le combiné du support, **caractérisé en ce que** la commande présente un dispositif de communication sans fil pour la communication avec un premier dispositif de communication sans fil correspondant du combiné, et **en ce que** le combiné est en outre muni : d'un deuxième dispositif de communication sans fil pour la communication avec un dispositif de communication sans fil correspondant du téléphone portable ; d'un dispositif pour le traitement de données d'autorisation d'accès vers un réseau de téléphonie mobile ; et d'une unité d'émission et réception téléphonique.

2. Dispositif à mains libres selon la revendication 1, **caractérisé en ce que** le combiné comporte un lecteur de carte pour une carte comprenant les données d'autorisation d'accès (carte SIM).

3. Dispositif à mains libres selon la revendication 1 ou 2, **caractérisé en ce que** le deuxième dispositif de communication sans fil est formé pour la transmission des données d'autorisation d'accès du téléphone portable.

4. Dispositif à mains libres selon l'une quelconque des revendications 1 à 3, **caractérisé en ce que** le combiné est muni d'un clavier de saisie.

5. Dispositif à mains libres selon l'une quelconque des revendications 1 à 4, **caractérisé en ce que** le combiné est muni d'un affichage pour afficher des données téléphoniques.

6. Dispositif à mains libres selon l'une quelconque des revendications 2 à 5, **caractérisé en ce que** le combiné est muni d'une source de tension propre.

7. Dispositif à mains libres selon la revendication 6, **caractérisé en ce que** la source de tension du combiné est formée par une batterie qui peut être chargée lorsque le combiné est placé dans le support.

8. Utilisation du combiné du dispositif à mains libres selon la revendication 6 ou 7 en tant que téléphone portable autonome.
